# EUROPÄISCHE PATENTSCHRIFT

(11) **EP 3 076 520 B1**
(45) Veröffentlichungstag und Bekanntmachung des Hinweises auf die Patenterteilung: **01.11.2017**
(21) Anmeldenummer: 15161926.9
(22) Anmeldetag: 31.03.2015
(51) Int. Cl.: H02K 1/27

(54) **ROTOR FÜR EINE ELEKTRISCHE MASCHINE UND HERSTELLUNGSVERFAHREN**
ROTOR FOR AN ELECTRIC MACHINE AND PRODUCTION METHOD
ROTOR DE MACHINE ÉLECTRIQUE ET PROCÉDÉ DE PRODUCTION

(43) Veröffentlichungstag der Anmeldung: 05.10.2016
(73) Patentinhaber: Siemens Aktiengesellschaft, 80333 München (DE)
(72) Erfinder: Eckert, Rainer, 97616 Bad Neustadt / Herschfeld (DE); Männl, Andreas, 97720 Nüdlingen (DE)

(56) Entgegenhaltungen:
- WO-A1-03/088449
- WO-A2-2013/104998
- DE-A1-102006 049 866
- JP-A- 2004 153 913
- US-A1- 2009 267 438
- US-A1- 2014 210 284

## Beschreibung

Die Erfindung betrifft einen Rotor für eine elektrische Maschine umfassend ein Blechpaket, welches eine radiale Außenseite aufweist, zumindest einen Permanentmagnet, welcher jeweils an der radialen Außenseite des Blechpakets angeordnet ist, wobei das Blechpaket in jenem jeweiligen axialen Blechpaketabschnitt, an dessen radialer Außenseite der jeweilige Permanentmagnet angeordnet ist, erste, im Wesentlichen scheibenförmige Läuferbleche aufweist, und zumindest ein Fixierelement, mittels welchem der jeweilige Permanentmagnet in radialer Richtung auf der radialen Außenseite des Blechpakets fixiert ist. Weiterhin betrifft die Erfindung eine elektrische Maschine aufweisend einen derartigen Rotor sowie ein Verfahren zur Herstellung eines Rotors.

Eine derartige Vorrichtung bzw. ein derartiges Verfahren kommen beispielsweise im Zusammenhang mit Servomotoren zum Einsatz. Dabei gibt es diverse Möglichkeiten, Läufer für Servomotoren aufzubauen, zum Beispiel können so genannte Schalenmagnete direkt auf die Welle geklebt oder auf das Blechpaket geklebt werden. Bekannt sind auch die Verwendung von innen liegenden bzw. vergrabenen Magneten auf Läufersegmenten oder die Verwendung von Segmentmagneten mit sternförmigen Läuferblechen.

Aus der EP 2 685 607 A1 ist ein Rotor für eine elektrische Maschine mit mehreren Permanentmagneten bekannt, welche am Außenumfang des Rotors angeordnet sind, wobei eine Bandage derart um den Rotor gewickelt ist, dass die Permanentmagnete durch die Bandage am Außenumfang des Rotors fixiert sind.

Aus der US 2014/210284 A1 ist ein Motor mit einer Welle, einem Stator und einem Rotor bekannt, wobei der Rotor an seiner radialen Außenseite Permanentmagnete aufweist, zwischen denen in Umfangsrichtung Vorsprünge des Rotorkerns angeordnet sind.

Aus der WO 2013/104998 A2 ist ein Permanentmagnet-Rotor mit einer Welle, einem Kern und mehreren Permanentmagneten bekannt, wobei der Rotorkern schwalbenschwanzförmige Vorsprünge aufweist, die zwischen zwei in Umfangsrichtung benachbarten Permanentmagneten angeordnet sind.

Aus der US 2009/267438 A1 ist ein Rotor mit einem Rotorjoch bekannt, welches eine polygonale Stützstruktur, mehrere Magnethaltesektionen, die an der äußeren Oberfläche des Rotorjoch angeordnet sind, Segmentmagnete, die jeweils auf den Magnethaltesektionen angeordnet sind und sich in axialer Richtung auf dem Rotorjoch erstrecken, und Vorsprünge aufweist, die auf dem Rotorjoch angeordnet sind und aus dem Rotorjoch hervorragen, wobei die Vorsprünge in einem Grenzbereich zwischen jeweils zwei benachbarten Magnethaltesektionen angeordnet sind und jeweils paarweise in axialer Richtung vorgesehen sind.

Aus der JP 2004 153913 A ist ein Rotor für einen Permanentmagnet-Motor bekannt, wobei der Rotor T-förmige Klemmteile an seiner äußeren Oberfläche aufweist, wobei die beiden Enden eines Permanentmagneten durch die Klemmteile eingeklemmt werden.

Eine Aufgabe der Erfindung ist es, einen Rotor bzw. eine elektrische Maschine zu schaffen, welcher bzw. welche einerseits vergleichsweise einfach herzustellen ist und andererseits zuverlässig fixierte Permanentmagnete aufweist.

Eine Lösung der Aufgabe ergibt sich durch einen Rotor der eingangs genannten Art dadurch, dass das Blechpaket im jeweiligen Blechpaketabschnitt zumindest ein zweites Läuferblech aufweist, welches jeweils im Wesentlichen scheibenförmig ausgestaltet ist und jeweils zumindest zwei, in radialer Richtung hervorstehende Vorsprünge aufweist, wobei zumindest zwei der Vorsprünge des jeweiligen zweiten Läuferblechs derart in Umfangsrichtung versetzt zueinander angeordnet sind, dass der jeweilige, zwischen diesen beiden Vorsprüngen angeordnete Permanentmagnet in Umfangsrichtung vorzugsweise formschlüssig fixiert ist, wobei am jeweiligen axialen Blechpaketabschnitt zumindest zwei Permanentmagnete in axialer Richtung aneinander angrenzend angeordnet sind, wobei die zumindest zwei, in axialer Richtung aneinander angrenzend angeordneten Permanentmagnete in Umfangsrichtung jeweils um einen Versatz zu einander versetzt angeordnet sind, wobei zumindest zwei Permanentmagnete in axialer Richtung aneinander angrenzend an einem jeweiligen, axialen Blechpaketabschnitt angeordnet sind, wobei die jeweiligen Vorsprünge der in axialer Richtung aneinander angrenzenden Blechpaketabschnitte in Umfangsrichtung um einen Versatz zu einander versetzt angeordnet sind, wobei ein jeweiliger, erster axialer Abstand zwischen den beiden benachbarten zweiten Läuferblechen von benachbarten Blechpaketabschnitten im Wesentlichen mindestens so groß wie eine aufsummierte axiale Längentoleranz der jeweiligen relevanten Permanentmagnete und/ oder der relevanten ersten Läuferbleche und relevanten zweiten Läuferbleche ist, wobei die ersten Läuferbleche und das zumindest eine zweite Läuferblech jeweils senkrecht zur axialen Richtung einen im Wesentlichen kreisförmigen Querschnitt aufweisen, wobei der jeweilige Permanentmagnet im Wesentlichen die Form eines Abschnittes in Umfangsrichtung eines Hohlzylinders aufweist, wobei die Permanentmagnete derart angeordnet sind, dass eine Staffelung der Permanentmagnete ohne Spalte zwischen den axialer Richtung benachbarten Permanentmagneten ausführbar ist.

Weiterhin ergibt sich eine Lösung der Aufgabe durch eine elektrische Maschine aufweisend einen derartigen Rotor.

Ferner ergibt sich eine Lösung der Aufgabe durch ein Verfahren zur Herstellung eines derartigen Rotors, insbesondere für eine elektrische Maschine, umfassend die folgenden Verfahrensschritte:
- Bereitstellen erster, im Wesentlichen scheibenförmiger Läuferbleche und zumindest eines zweiten Läuferblechs, welches jeweils im Wesentlichen scheibenförmig ausgestaltet ist und jeweils zumindest zwei, in radialer Richtung hervorstehende Vorsprünge aufweist,
- Bereitstellen zumindest eines Permanentmagneten,
- Anordnen der ersten Läuferbleche und des zumindest einen zweiten Läuferblechs zu einem Blechpaket, welches eine radiale Außenseite aufweist,
- Bereitstellen zumindest eines Fixierelementes, mittels welchem der jeweilige Permanentmagnet in radialer Richtung auf der radialen Außenseite des Blechpakets fixierbar ist,
- Anordnen des jeweiligen Permanentmagneten an der radialen Außenseite des Blechpakets und
- Fixieren des jeweiligen Permanentmagneten in radialer Richtung auf der radialen Außenseite des Blechpakets mittels des zumindest einen Fixierelementes,
wobei das Blechpaket in jenem jeweiligen axialen Blechpaketabschnitt, an dessen radialer Außenseite der jeweilige Permanentmagnet angeordnet ist, die ersten Läuferbleche und das zumindest eine zweite Läuferblech aufweist,
wobei zumindest zwei der Vorsprünge des jeweiligen zweiten Läuferblechs derart in Umfangsrichtung versetzt einander angeordnet sind, dass der jeweilige, zwischen diesen beiden Vorsprüngen angeordnete Permanentmagnet in Umfangsrichtung vorzugsweise formschlüssig fixiert ist.

Das Blechpaket des Rotors weist somit zumindest einen Blechpaketabschnitt, vorzugsweise mehrere in axialer Richtung hintereinander angeordnete Blechpaketabschnitte, auf. Der jeweilige Blechpaketabschnitt weist erste Läuferbleche und zumindest ein zweites Läuferblech auf, wobei je Blechpaketabschnitt vorgesehen ist, zumindest einen Permanentmagnet an der radialen Außenseite des Blechpakets anzuordnen. Die ersten Läuferbleche und das jeweilige zweite Läuferblech sind im Wesentlichen ähnlich ausgestaltet, unterscheiden sich jedoch vor allem durch die zumindest zwei, in radialer Richtung hervorstehenden Vorsprünge des jeweiligen zweiten Läuferblechs. Vorzugsweise erstrecken sich die Vorsprünge in radialer Richtung entlang höchstens der ganzen bzw. höchstens drei Vierteln der radialen Erstreckung des jeweiligen Permanentmagneten. Die jeweiligen Läuferbleche können beispielsweise in ihrem Inneren Bohrungen, Aussparungen oder dergleichen aufweisen und sind insbesondere aus Elektroblech gefertigt. Vorzugsweise sind die ersten Läuferbleche und das jeweilige zweite Läuferblech mittels Stanzpaketierung miteinander zum Blechpaket verbunden.

Vorzugsweise weisen der jeweilige Blechpaketabschnitt und der jeweilige, darauf angeordneten Permanentmagnet dieselbe axiale Erstreckung auf. Aufgrund von Längentoleranzen oder aufgrund bestimmter, verfügbarer Blechdicken kann der jeweilige Blechpaketabschnitt auch geringfügig länger ausfallen als der jeweilige Permanentmagnet.

Eine zuverlässige Fixierung des jeweiligen Permanentmagneten wird bei dem vorgeschlagenen Rotor wie folgt erreicht. Zum einen wird eine Fixierung des jeweiligen Permanentmagneten in radialer Richtung durch das jeweilige Fixierelement gewährleistet, wobei das jeweilige Fixierelement den jeweiligen Permanentmagneten vorteilhafterweise auch in axialer Richtung fixiert. Somit ist der jeweilige Permanentmagnet mittels des jeweiligen Fixierelementes insbesondere gegen ein Abheben von dem Blechpaket aufgrund der während der Rotation des Rotors auftretenden Fliehkräfte gesichert.

Zum anderen wird der jeweilige Permanentmagnet in Umfangsrichtung mithilfe zweier benachbarter Vorsprünge des jeweiligen zweiten Läuferblechs fixiert. Hierzu sind die beiden benachbarten Vorsprünge derart in Umfangsrichtung versetzt zueinander angeordnet, dass der jeweilige, zwischen diesen beiden Vorsprüngen angeordnete Permanentmagnet in Umfangsrichtung fixiert ist. Dies kann beispielsweise dadurch erreicht werden, dass die beiden benachbarten Vorsprünge in Umfangsrichtung in einem bestimmten Abstand zueinander angeordnet sind, wobei dieser Abstand im Wesentlichen der Erstreckung des Permanentmagneten in Umfangsrichtung entspricht. Vorteilhafterweise sind die beiden benachbarten Vorsprünge und der jeweilige Permanentmagnet derart angeordnet bzw. ausgestaltet, dass der jeweilige Permanentmagnet in Umfangsrichtung formschlüssig fixiert ist. Vorzugsweise liegt dabei eine Spielpassung vor, so dass der Abstand der beiden benachbarten Vorsprünge und die Erstreckung des jeweiligen Permanentmagneten in Umfangsrichtung dasselbe Nennmaß aufweisen und die erstgenannte Größe leicht größer als bzw. im Grenzfall gleich groß wie die zweitgenannte Größe ist. Somit ist der jeweilige Permanentmagnet mittels der Vorsprünge des jeweiligen zweiten Läuferblechs insbesondere gegen ein Durchrutschen, d.h. ein Verschieben in Umfangsrichtung beispielsweise bei besonders großen Beschleunigungen, wie zum Beispiel bei einem Notstop, gesichert.

Der vorgeschlagene Rotor bzw. das vorgeschlagene Herstellungsverfahren greift auf Läuferbleche zurück, welche vergleichsweise einfach herzustellen sind. Dabei kann das Blechpaket derart ausgestaltet werden, dass es vergleichsweise wenige zweite Läuferbleche aufweist, so dass die Anzahl der ersten Läuferbleche beispielsweise mindestens zehn Mal bzw. mindestens 20 Mal so groß ist wie die Anzahl der zweiten Läuferbleche.

Die Verwendung von einigen wenigen zweiten Läuferblechen erlaubt zum einen eine sichere Fixierung des jeweiligen Permanentmagneten in Umfangsrichtung und zum anderen die Einsparung unnötiger, zu bewegender Masse. Dabei tragen alle Läuferbleche einen Beitrag zur radialen Fixierung des jeweiligen Permanentmagneten, wobei das jeweilige zweite Läuferblech zusätzlich einen entscheidenden Beitrag zur Fixierung des Permanentmagneten in Umfangsrichtung leistet.

Zur Herstellung des vorgeschlagenen Rotors kann beispielsweise vorgesehen sein, dass die jeweiligen Läuferbleche eine zentrale Bohrung aufweisen und das aus den Läuferblechen gebildete Blechpaket zunächst auf eine Welle gefügt wird. Anschließend wird der jeweilige Permanentmagnet an der radialen Außenseite des Blechpakets angeordnet, wobei zur Fixierung des jeweiligen Permanentmagneten in radialer Richtung das jeweilige Fixierelement zum Einsatz kommt. Der jeweilige Permanentmagnet kann während des Anordnens am Blechpaket schon magnetisiert oder noch unmagnetisiert sein, wobei im letzteren Fall dass Magnetisieren des jeweiligen Permanentmagneten nach dem Anordnen auf dem Blechpaket vorgenommen wird.

Die im Wesentlichen scheibenförmige Ausgestaltung des jeweiligen Läuferblechs soll dabei im vorliegenden Dokument als erfüllt angesehen sein, wenn das jeweilige Läuferblech innerhalb eines gewissen Toleranzbereiches, von zum Beispiel +/-5%, scheibenförmig ausgestaltet ist. Entsprechendes gilt für entsprechende, weitere Merkmale des vorliegenden Dokuments.

Prinzipiell kann der vorgeschlagene Rotor auch derart ausgestaltet werden, dass lediglich ein axialer Blechpaketabschnitt vorgesehen ist, auf dessen radialer Außenseite zumindest ein Permanentmagnet angeordnet ist, der sich jeweils im Wesentlichen über die gesamte axiale Erstreckung des Rotors erstreckt. Dabei kann der axiale Blechpaketabschnitt insbesondere lediglich ein zweites Läuferblech, insbesondere mehrere zweite Läuferbleche, aufweisen.

Der jeweilige Blechpaketabschnitt weist somit die zumindest zwei in axialer Richtung aneinander angrenzend angeordneten Permanentmagnete an seiner radialen Außenseite auf, welche als eine Art Verband ausgestaltet sein können und jeweils um einen Versatz in Umfangsrichtung zu einander angeordnet bzw. abgestaffelt sind. Dabei ist vorgesehen, dass der jeweilige Blechpaketabschnitt zumindest ein zweites Läuferblech aufweist. Die Permanentmagnete des jeweiligen Verbandes sind insbesondere durch das jeweilige Fixierelement gut untereinander verbunden bzw. bilden einen starren Körper. Der jeweilige Verband aus Permanentmagneten wird insbesondere lediglich durch die beiden entsprechenden Vorsprünge nur eines zweiten Läuferblechs in Umfangsrichtung fixiert.

Dabei kann der Rotor durchaus zwei oder mehr solcher Verbände aufweisen, welche jeweils einen kurzen Abschnitt einer Schraubenbahn auf der radialen Außenseite beschreiben. Die derartige Anordnung der Permanentmagnete erlaubt die Optimierung von Kenngrößen der entsprechenden elektrischen Maschine, wie z. B. der Drehmomentwelligkeit, dem Nutrasten oder den EMK-Oberwellen bei einem entsprechenden Elektromotor.

Der vorgeschlagene Rotor weist zumindest zwei Permanentmagnete auf, welche einem jeweiligen, axialen Blechpaketabschnitt zugeordnet sind, in axialer Richtung betrachtet aneinander angrenzen und somit im Wesentlichen hintereinander angeordnet sind. Die entsprechenden, jeweiligen Vorsprünge der jeweiligen Blechpaketabschnitte sind dabei in Umfangsrichtung zu einander versetzt angeordnet, so dass entsprechend auch der jeweilige Permanentmagnet des einen Blechpaketabschnitts in Bezug auf den jeweiligen anderen Permanentmagneten des anderen Blechpaketabschnitts in Umfangsrichtung versetzt angeordnet ist.

Somit weist der Rotor in axialer Richtung verlaufende Reihen von Permanentmagneten auf, wobei die Permanentmagnete zu einander in Umfangsrichtung abgestaffelt sind. Dabei kann der Rotor durchaus zwei oder mehr solcher Reihen aufweisen, welche jeweils einen kurzen Abschnitt einer Schraubenbahn auf der radialen Außenseite beschreiben. Die derartige Anordnung der Permanentmagnete erlaubt eine Optimierung von Kenngrößen der entsprechenden elektrischen Maschine, wie z. B. der Drehmomentwelligkeit, dem Nutrasten oder den EMK-Oberwellen bei einem entsprechenden Elektromotor.

Unter der jeweiligen Längentoleranz wird dabei das jeweilige Nennmaß unter Berücksichtigung der jeweiligen Passung verstanden.

Für zwei in axialer Richtung aneinander angrenzende Blechpaketabschnitte ist ein jeweiliger, erster axialer Abstand zwischen den jeweils äußersten, zweiten Läuferblechen des jeweiligen Blechpaketabschnitts vorgesehen. Da der erste axiale Abstand mindestens so groß wird wie die Längentoleranzen des jeweiligen Permanentmagneten und/ oder der relevanten ersten Läuferbleche und relevanten zweiten Läuferbleche, können diese Toleranzen ausgeglichen werden, so dass die Staffelung der Permanentmagnete stets erreicht werden kann und axiale Reihen von Permanentmagneten ohne Spalte zwischen in axialer Richtung benachbarten Permanentmagneten ausgeführt werden können. Insbesondere falls das jeweilige Fixierelement ein Bandageband umfasst, wie unten erläutert, ist die Vermeidung von axialen Spalten, die in Umfangsrichtung verlaufen, besonders wichtig.

Die aufsummierte axiale Längentoleranz berücksichtigt somit insbesondere die axialen Toleranzen, die an der jeweiligen axialen Stelle des Rotors eine Rolle spielen. Somit für die betrachtete, axiale Stelle insbesondere jene Längentoleranzen derjenigen Permanentmagnete und Läuferbleche berücksichtigt, welche sich entlang zur jeweiligen axialen Stirnseite des Rotors aufsummieren.

Wenn beispielsweise zehn in etwa gleichartige Permanentmagnete in axialer Richtung hintereinander angeordnet sind und die axiale Mitte des Rotors betrachtet wird, berücksichtigt die aufsummierte axiale Längentoleranz somit die axialen Toleranzen von zumindest fünf Permanentmagneten, welche zwischen der jeweiligen Stirnseite des Rotors und der axialen Mitte in axialer Richtung hintereinander angeordnet sind, sowie von den Läuferblechen, die unter den betrachteten Permanentmagneten angeordnet sind. Dabei kann beispielsweise auch eine Toleranz bezüglich der Positionierung des jeweiligen Permanentmagneten auf der radialen Außenseite bei der axialen Längentoleranz des jeweiligen Permanentmagneten berücksichtigt werden.

Die Ausgestaltung der jeweiligen Läuferbleche mit einem im Wesentlichen kreisförmigen Querschnitt, wobei das jeweilige zweite Läuferblech die zumindest zwei Vorsprünge aufweist, erlaubt die Konstruktion eines Rotors bzw. einer entsprechenden elektrischen Maschine mit besonders guten elektrischen und mechanischen Eigenschaften. Insbesondere lassen sich dadurch Kenngrößen der entsprechenden elektrischen Maschine besonders gut optimieren. Entsprechend ist der jeweilige Permanentmagnet im Wesentlichen als Abschnitt eines Hohlzylinders ausgestaltet, so dass der jeweilige Permanentmagnet bei einer Projektion in axialer Richtung als bogenförmiger Sektor eines Kreisrings erscheint. Ein derartiger Permanentmagnet ist somit insbesondere als Schalenmagnet ausgestaltet.

Die derartige Ausgestaltung der Läuferbleche ermöglicht außerdem die Konstruktion des Rotors mithilfe lediglich eines Typs von zweiten Läuferblechen, selbst dann, wenn wie oben erläutert die jeweiligen Vorsprünge von in axialer Richtung benachbarten Blechpaketabschnitten in Umfangsrichtung zu einander versetzt angeordnet sind. Um den Versatz in Umfangsrichtung zu erreichen, können gleiche, zweite Läuferbleche hergestellt werden, welche lediglich in Umfangsrichtung versetzt zueinander wie oben erläutert angeordnet werden.

Bei einer vorteilhaften Ausgestaltung der Erfindung weist das Blechpaket höchstens in jeder zehnten Lage bzw. höchstens in jeder 20. Lage eines des zumindest einen zweiten Läuferblechs und in den übrigen Lagen jeweils eines der ersten Läuferbleche auf.

Beispielsweise weist der jeweilige Blechpaketabschnitt zwei oder mehr Dutzend Bleche auf, von denen höchstens jedes zehnte bzw. höchstens jedes 20. Blech als zweites Läuferblech mit den in radialer Richtung hervorstehenden Vorsprüngen und die übrigen Bleche jeweils als erstes Läuferblech ausgestaltet sind. Somit gelingt eine Fixierung des jeweiligen Permanentmagneten in Umfangsrichtung mit vergleichsweise geringem Aufwand, wobei hierzu insbesondere sehr wenig zu bewegende Masse erforderlich ist.

Insbesondere ist dabei vorgesehen, dass in axialer Richtung auf mindestens neun bzw. mindestens 19 Lagen mit einem jeweiligen ersten Läuferblech eine Lage mit einem jeweiligen zweiten Läuferblech folgt. Denkbar ist jedoch auch eine andere Reihenfolge der Bleche in axialer Richtung, solange das oben erläuterte Verhältnis der Anzahl der zweiten Läuferbleche zur Anzahl der ersten Läuferbleche erfüllt ist.

Bei einer weiteren vorteilhaften Ausgestaltung der Erfindung weist das Blechpaket im jeweiligen Blechpaketabschnitt zwei zweite Läuferbleche auf, zwischen denen jeweils zumindest eines der ersten Läuferbleche angeordnet ist, wobei die zwei zweiten Läuferbleche im Wesentlichen symmetrisch zur axialen Mitte des jeweiligen Permanentmagneten angeordnet sind.

Indem zwei zweite Läuferbleche je Blechpaketabschnitt vorgesehen sind, wird ein Verdrehen des jeweiligen Permanentmagneten auf der radialen Außenseite zuverlässig verhindert. Die symmetrische Anordnung der zwei zweiten Läuferbleche bewirkt dabei, dass während einer Beschleunigung des Rotors auftretende Kräfte besonders gleichmäßig vom jeweiligen Permanentmagneten an das Blechpaket und umgekehrt übertragen bzw. verteilt werden. Dies wird zusätzlich unterstützt, wenn der jeweilige Permanentmagnet derart ausgestaltet ist, dass er bündig bzw. flächig auf der im Wesentlichen zylindermantelförmigen radialen Außenfläche aufliegt. Insgesamt lässt sich dadurch eine besonders gute Fixierung des jeweiligen Permanentmagneten in Umfangsrichtung erreichen.

Insbesondere sind je Blechpaketabschnitt genau zwei zweite Läuferbleche vorgesehen. Unter Umständen kann der jeweilige Blechpaketabschnitt jedoch auch mehr als zwei Läuferbleche aufweisen.

Denkbar ist auch, dass die beiden zweiten Läuferbleche im Wesentlichen symmetrisch zur axialen Mitte des jeweiligen Blechpaketabschnitts angeordnet sind, sofern der jeweilige Blechpaketabschnitt eine größere axiale Erstreckung als der jeweilige Permanentmagnet aufweist. Diese Anordnung der jeweiligen zweiten Läuferbleche kann jedoch durch Toleranzen bei der axialen Erstreckung des jeweiligen Permanentmagneten bzw. der Läuferbleche erschwert oder verhindert werden, insbesondere wenn sich die jeweiligen Toleranzen aufsummieren und somit nur eine asymmetrische Anordnung der jeweiligen zweiten Läuferbleche erlauben.

Bei einer weiteren vorteilhaften Ausgestaltung der Erfindung ist zwischen dem jeweiligen zweiten Läuferblech und dem jeweiligen axialen Rand des jeweiligen Blechpaketabschnitts zumindest eines der ersten Läuferbleche angeordnet.

Das Anordnen zumindest eines ersten Läuferbleche am jeweiligen axialen Rand des jeweiligen Blechpaketabschnitts und somit auch des jeweiligen Permanentmagneten gewährleistet eine besonders zuverlässige Fixierung des jeweiligen Permanentmagneten, insbesondere schon während der Montage des Rotors.

Von besonderem Vorteil ist bei dieser Anordnung, dass durch sie erst die oben erläuterte Staffelung der Permanentmagnete in axialer Richtung ermöglicht wird, bei welcher die jeweiligen Vorsprünge von in axialer Richtung benachbarten Blechpaketabschnitten in Umfangsrichtung zu einander versetzt angeordnet sind. Denn befände ein jeweiliger Vorsprung direkt am axialen Rand des jeweiligen Blechpaketabschnitt und somit des jeweiligen Permanentmagneten, würde der jeweilige Vorsprung in einen Permanentmagneten wie gewünscht in Umfangsrichtung fixieren und den anderen, in axialer Richtung benachbarten Permanentmagneten in seiner Positionierung in Umfangsrichtung einschränken. Dies liegt daran, dass der andere Permanentmagnet in Umfangsrichtung genau an jener Position angeordnet sein müsste wie auch der erste Permanentmagnet oder das an dieser Stelle liegende zweite Läuferblech mit den Vorsprüngen, was die oben erläuterte Staffelung unmöglich machen würde und somit nachteilige elektrische und mechanische Eigenschaften zur Folge hätte. Oftmals erlaubt die vorgeschlagene Anordnung die erläuterte Staffelung selbst bei vergleichsweise großen Längentoleranzen der Permanentmagnete in axialer Richtung.

Bei einer weiteren vorteilhaften Ausgestaltung der Erfindung umfasst das zumindest eine Fixierelement zumindest ein Klebeband, wobei das jeweilige Klebeband zwischen der radialen Außenseite und dem jeweiligen Permanentmagneten angeordnet ist.

Das jeweilige Klebeband wird bzw. ist vorzugsweise auf der radialen Außenseite aufgebracht, um anschließend den jeweiligen Permanentmagnet über das jeweilige Klebeband auf der radialen Außenseite des Blechpakets zu fixieren. Beispielsweise handelt es sich bei dem jeweiligen Klebeband um ein mit Haftklebstoffen beschichtetes, streifenförmiges Trägermaterial, wobei der Haftklebstoff vorzugsweise doppelseitig auf dem Trägermaterial aufgebracht ist. Vorzugsweise weist das jeweilige Klebeband eine Dicke in radialer Richtung von höchstens 0,2 mm, vorzugsweise 0,1 mm, auf.

Beispielsweise kann das jeweilige Klebeband in im Wesentlichen axialer Richtung verlaufend auf der radialen Außenseite angebracht werden, so dass Ringe um die radiale Außenseite gebildet werden.

Vorzugsweise erstrecken sich die Vorsprünge in radialer Richtung lediglich derart, dass stets zwischen zwei Vorsprüngen ein jeweiliges Klebeband aufgebracht werden kann.

Bei einer weiteren vorteilhaften Ausgestaltung der Erfindung ist das jeweilige Klebeband dabei in axialer Richtung zwischen zwei benachbarten Vorsprüngen angeordnet.

Das jeweilige Klebeband ist somit insbesondere in Umfangsrichtung umlaufend auf der radialen Außenseite angebracht. In axialer Richtung erstreckt sich das jeweilige Klebeband vorzugsweise jeweils zwischen zwei in axialer Richtung benachbarten Vorsprüngen, wobei ein jeweiliges Klebeband auch zwischen zwei Vorsprüngen von in axialer Richtung benachbarten Blechpaketabschnitten angeordnet sein kann. Weiterhin kann ein jeweiliges Klebeband zwischen dem axialen Rand des Blechpakets und dem jeweils am nächstliegenden Vorsprung angeordnet sein.

Bei einer weiteren vorteilhaften Ausgestaltung der Erfindung weist der jeweilige Blechpaketabschnitt zwei zweite Läuferbleche auf, zwischen denen jeweils zumindest eines der ersten Läuferbleche angeordnet ist, wobei die zwei zweiten Läuferbleche derart in axialer Richtung angeordnet sind, dass ein jeweiliger, zweiter axialer Abstand zwischen zwei jeweils benachbarten zweiten Läuferblechen im Wesentlichen doppelt so groß bzw. im Wesentlichen gleich groß wie ein jeweiliger dritter axialer Abstand zwischen dem jeweiligen axialen Rand des jeweiligen Blechpaketabschnitts und dem jeweils nächstliegenden zweiten Läuferblech ist.

Indem der jeweilige zweite Abstand im Wesentlichen gleich groß wie der jeweilige dritte Abstand ist, wird der jeweilige Blechpaketabschnitt in circa gleich große axiale Bereiche unterteilt, wodurch die während des Betriebs auftretenden Kräfte gut vom jeweiligen Permanentmagneten an das Blechpaket und umgekehrt übertragen bzw. verteilt werden. Besonders vorteilhaft ist eine Anordnung derart, dass der jeweilige zweite Abstand im Wesentlichen doppelt so groß wie der jeweilige dritte Abstand ist. Zum einen ist somit der Abstand in axialer Richtung zwischen benachbarten Vorsprüngen stets etwa gleich groß, selbst wenn benachbarte Vorsprünge zu benachbarten Blechpaketabschnitten gehören. Zum anderen ist auch die Kraftverteilung innerhalb des jeweiligen Blechpaketabschnitts besonders gleichmäßig.

Für den Fall, dass das jeweilige Fixierelement zumindest ein Klebeband umfasst und der jeweilige zweite Abstand im Wesentlichen gleich groß wie der jeweilige dritte Abstand ist, können in axialer Richtung abwechselnd ein schmales und ein breites Klebeband auf der radialen Außenseite angebracht werden. Ist der jeweilige zweite Abstand jedoch im Wesentlichen doppelt so groß wie der jeweilige dritte Abstand, so können jeweils Klebebänder in axialer Richtung zwischen den Vorsprüngen angebracht werden, welche stets in etwa gleich breit sind. Indem nur Klebeband mit einer Breite verarbeitet wird, lassen sich somit für den letztgenannten Fall Kosten sparen.

Insbesondere sind je Blechpaketabschnitt genau zwei zweite Läuferbleche vorgesehen. Unter Umständen kann der jeweilige Blechpaketabschnitt jedoch auch mehr als zwei Läuferbleche aufweisen.

Bei dem Verhältnis des zweiten Abstand zum jeweiligen dritten Abstand wird dabei vorzugsweise der oben erläuterte Toleranzbereich von zum Beispiel +/- 5 % berücksichtigt. Insbesondere wenn die axiale Dicke der jeweiligen Bleche des Blechpakets im Verhältnis zur axialen Dicke des Blechpakets relativ groß ist, kann der Toleranzbereich auch größer gewählt werden, wie zum Beispiel +/- 10 %.

Bei einer weiteren vorteilhaften Ausgestaltung der Erfindung ist eine Breite des jeweiligen Klebebandes, welches zwischen zwei benachbarten Vorsprüngen des jeweiligen Blechpaketabschnitts angeordnet ist, dabei höchstens so groß wie der jeweilige zweite axiale Abstand.

Eine derartige Ausgestaltung erlaubt, ein jeweiliges Klebeband auch unter der axialen Mitte des jeweiligen Permanentmagneten anzubringen. Dabei wird das Klebeband zwischen in axialer Richtung benachbarten Vorsprüngen angebracht und läuft in Umfangsrichtung um die darunter angeordneten ersten Läuferbleche herum.

Bei einer weiteren vorteilhaften Ausgestaltung der Erfindung umfasst das zumindest eine Fixierelement zumindest ein Bandageband, welches jeweils um das Blechpaket und dem darauf angeordneten, zumindest einen Permanentmagnet gewickelt ist.

Das jeweilige Bandageband bewirkt auch bei hohen Drehzahlen des Rotors eine zuverlässige Fixierung des jeweiligen Permanentmagneten in radialer Richtung.

Prinzipiell ist dabei denkbar, dass das jeweilige Fixierelement lediglich ein jeweiliges Bandageband aufweist, insbesondere falls der jeweilige Permanentmagnet schon vor seiner Anordnung auf der radialen Außenseite magnetisiert ist und schon durch seine magnetische Anziehungskraft ohne weiteres während der Montage auf der radialen Außenseite fixiert ist.

Weist das jeweilige Fixierelement zumindest ein Bandageband sowie eines der oben erläuterten Klebeband auf, kann insbesondere ein jeweiliges Klebeband zum Einsatz kommen, welches den jeweiligen Permanentmagneten lediglich während der Montage provisorisch fixiert und für eine Fixierung des jeweiligen Permanentmagneten bei Drehzahlen des Rotors von mehr als 50 Umdrehungen/min zu schwach sind bzw. für eine dauerhafte Fixierung nicht ausgelegt sind. Somit kann insbesondere auf einen Zweikomponentenkleber verzichtet werden.

Vorzugsweise ist der vorgeschlagene Rotor bzw. die vorgeschlagene elektrische Maschine mit einer Drehzahl von mehreren 1000 Umdrehungen pro Minute, insbesondere bis 15.000 bzw. 25.000 Umdrehungen pro Minute betreibbar. Beispielsweise kann die elektrische Maschine dabei als Elektromotor ausgestaltet sein. Vorzugsweise weist die elektrische Maschine dabei eine elektrische Leistung von mehreren 100 W bis mehrere 10 kW, insbesondere einige 100 kW, auf.

Im Folgenden wird die Erfindung anhand der in den Figuren dargestellten Ausführungsbeispiele näher beschrieben und erläutert. Es zeigen:
- FIG 1-2: ein erstes und zweites Beispiel eines Rotors,
- FIG 3: ein erstes Ausführungsbeispiel des vorgeschlagenen Rotors,
- FIG 4: einen Querschnitt durch ein Ausführungsbeispiel eines zweiten Läuferblechs, und
- FIG 5-7: ein zweites bis viertes Ausführungsbeispiel des vorgeschlagenen Rotors.

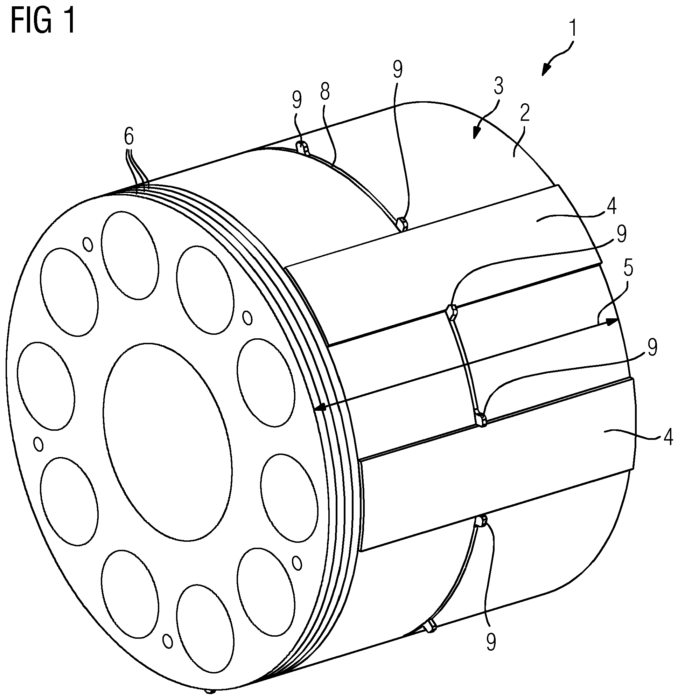

Figur 1 zeigt ein erstes Beispiel eines Rotors 1. Dargestellt ist dabei eine perspektivische Ansicht des Rotors 1, wobei einige Elemente des Rotors aufgrund einer verbesserten Übersicht nicht dargestellt sind.

Der Rotor 1 weist ein Blechpaket 2 mit einem Blechpaketabschnitt 5 und einer radialen Außenseite 3 auf, auf welcher mehrere Permanentmagnete 4 angeordnet sind. Von den Permanentmagneten 4 sind in der Figur 1 jedoch lediglich zwei Stück angedeutet. Der jeweilige Permanentmagnet 4 erstreckt sich in axialer Richtung im Wesentlichen entlang des Blechpaketabschnitts 5.

Der Blechpaketabschnitt 5 weist dabei mehrere, im Wesentlichen scheibenförmige Läuferbleche 6 auf. Weiterhin weist der Rotor 1 zumindest ein Fixierelement auf, welches in Figur 1 nicht näher dargestellt ist und mittels welchem der jeweilige Permanentmagnet 4 in radialer Richtung auf der radialen Außenseite 3 des Blechpakets 2 fixiert ist.

Das Blechpaket 2 bzw. der Blechpaketabschnitt 5 weist weiterhin ein zweites Läuferblech 8 auf. Das zweite Läuferblech 8 ist im Wesentlichen scheibenförmig ausgestaltet und weist dabei mehrere, in radialer Richtung hervorstehende Vorsprünge 9 auf. Dabei sind jeweils zwei der Vorsprünge des zweiten Läuferblechs 8 derart in Umfangsrichtung versetzt zueinander angeordnet, dass der jeweilige, zwischen diesen beiden Vorsprüngen 9 angeordnete Permanentmagnet 4 in Umfangsrichtung fixiert ist. Vorzugsweise ist der jeweilige Permanentmagnet 4 durch die beiden Vorsprünge 9 formschlüssig fixiert.

Vorzugsweise weisen die ersten Läuferbleche 6 und das zweite Läuferblech 8 jeweils senkrecht zur axialen Richtung einen im Wesentlichen kreisförmigen Querschnitt auf, wobei die Permanentmagnete 4 jeweils insbesondere im Wesentlichen die Form eines Abschnittes in Umfangsrichtung eines Hohlzylinders aufweisen.

Im Inneren des jeweiligen ersten Läuferblechs und des jeweiligen zweiten Läuferblechs 8 können, wie in Figur 1 dargestellt, mehrere Bohrungen, Aussparungen oder dergleichen vorgesehen sein.

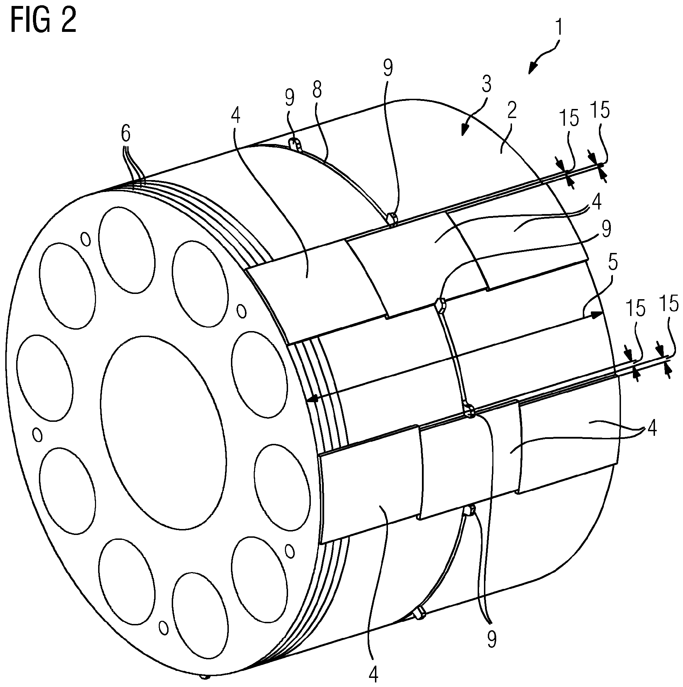

Figur 2 zeigt ein zweites Beispiel eines Rotors 1. Dargestellt ist dabei wiederum eine perspektivische Ansicht des Rotors 1, wobei einige Elemente des Rotors aufgrund einer verbesserten Übersicht nicht dargestellt sind. Gleiche Bezugszeichen wie in Figur 1 bezeichnen dabei gleiche Gegenstände.

Da das zweite Beispiel Ähnlichkeit mit dem ersten Beispiel aufweist, werden im Folgenden lediglich einige Unterschiede erläutert.

Der Rotor 1 bzw. Blechpaketabschnitt 5 weist an seiner radialen Außenseite 3 mehrere Verbände von Permanentmagneten 4 auf, wobei je Verband drei in axialer Richtung aneinander angrenzend angeordnete Permanentmagnete 4 vorgesehen sind. Innerhalb des jeweiligen Verbandes kann dabei wie in Figur 2 angedeutet ein Versatz 15 vorgesehen sein, um welchen axial benachbarte Permanentmagnete zu einander in Umfangsrichtung versetzt bzw. abgestaffelt sind. Dabei ist vorgesehen, dass der Blechpaketabschnitt 5 ein zweites Läuferblech 9 aufweist. Die Permanentmagnete 4 des jeweiligen Verbandes sind insbesondere durch das jeweilige Fixierelement gut untereinander verbunden bzw. bilden einen starren Körper. Der jeweilige Verband aus Permanentmagneten 4 wird insbesondere lediglich durch die beiden entsprechenden Vorsprünge 9 des nur einen zweiten Läuferblechs 8 in Umfangsrichtung fixiert.

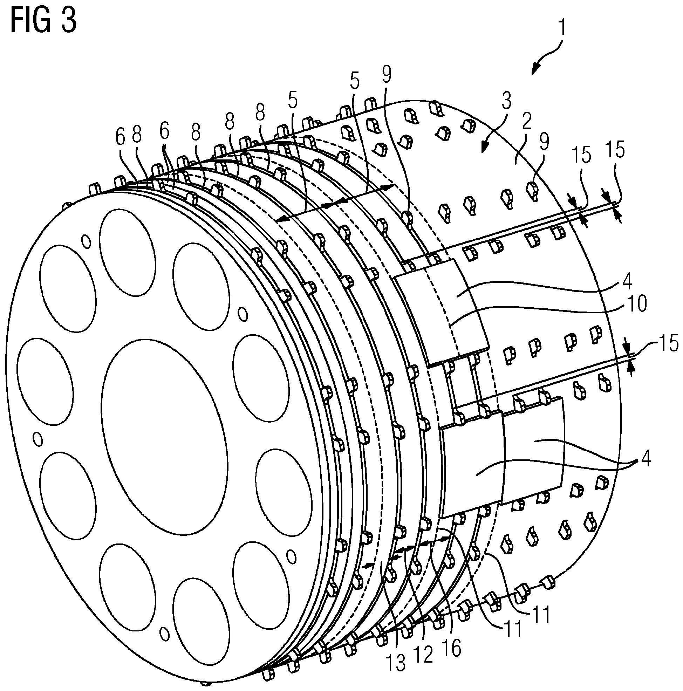

Figur 3 zeigt ein erstes Ausführungsbeispiel des vorgeschlagenen Rotors 1. Dargestellt ist dabei wiederum eine perspektivische Ansicht des Rotors 1, wobei einige Elemente des Rotors aufgrund einer verbesserten Übersicht nicht dargestellt sind.

Der Rotor 1 weist ein Blechpaket 2 mit einer radialen Außenseite 3 auf, auf welcher mehrere Permanentmagnete 4 angeordnet sind. Von den Permanentmagneten 4 sind in der Figur 1 jedoch lediglich drei Stück angedeutet. Das Blechpaket 2 weist in axialer Richtung mehrere hintereinander angeordnete Blechpaketabschnitte 5 auf, an deren jeweiliger radialer Außenseite 3 ein jeweiliger Permanentmagnet 4 angeordnet ist. Je Blechpaketabschnitt 5 sind dabei mehrere, im Wesentlichen scheibenförmige Läuferbleche 6 vorgesehen. Weiterhin weist der Rotor 1 zumindest ein Fixierelement auf, welches in Figur 1 nicht näher dargestellt ist und mittels welchem der jeweilige Permanentmagnet 4 in radialer Richtung auf der radialen Außenseite 3 des Blechpakets 2 fixiert ist.

Das Blechpaket 2 weist im jeweiligen Blechpaketabschnitt 5 weiterhin zumindest ein zweites Läuferblech 8 auf, wobei im vorliegenden Ausführungsbeispiel zwei zweite Läuferbleche 8 und eine größere Anzahl von ersten Läuferblechen 6 je Blechpaketabschnitt 5 verwendet werden. Das jeweilige zweite Läuferblech 8 ist im Wesentlichen scheibenförmig ausgestaltet und weist dabei mehrere, in radialer Richtung hervorstehende Vorsprünge 9 auf. Dabei sind jeweils zwei der Vorsprünge des jeweiligen zweiten Läuferblechs 8 derart in Umfangsrichtung versetzt zueinander angeordnet, dass der jeweilige, zwischen diesen beiden Vorsprüngen 9 angeordnete Permanentmagnet 4 in Umfangsrichtung fixiert ist. Vorzugsweise ist der jeweilige Permanentmagnet 4 durch die beiden Vorsprünge 9 formschlüssig fixiert.

Zwischen den beiden Läuferblechen 8 des jeweiligen Blechpaketabschnitts 5 sind dabei mehrere erste Läuferbleche 6 angeordnet, wobei die beiden zweiten Läuferbleche 8 im Wesentlichen symmetrisch zur axialen Mitte 10 des jeweiligen Permanentmagneten 4 angeordnet sind. In axialer Richtung sind dabei zwei oder mehr Permanentmagnete 4 aneinander angrenzend angeordnet, wobei die jeweiligen Vorsprünge 9 der entsprechenden, in axialer Richtung aneinander angrenzenden Blechpaketabschnitte 5 in Umfangsrichtung um einen Versatz 15 zu einander versetzt angeordnet sind. In axialer Richtung sind die Permanentmagnete 4 somit gestaffelt angeordnet.

Die ersten Läuferbleche 6 und die zweiten Läuferbleche 8 weisen jeweils senkrecht zur axialen Richtung einen im Wesentlichen kreisförmigen Querschnitt auf, wobei die Permanentmagnete 4 jeweils im Wesentlichen die Form eines Abschnittes in Umfangsrichtung eines Hohlzylinders aufweisen.

Zwischen dem jeweiligen zweiten Läuferblech 8 und dem axialen Rand 11 des jeweiligen Blechpaketabschnitts 5 ist dabei zumindest eines der ersten Läuferbleche 6 angeordnet. Ein jeweiliger, erster axialer Abstand 16 ist zwischen den beiden benachbarten zweiten Läuferblechen 8 von benachbarten Blechpaketabschnitt 5 im Wesentlichen mindestens so groß wie eine aufsummierte axiale Längentoleranz der jeweiligen relevanten Permanentmagnete 4 und/ oder der relevanten ersten Läuferbleche 6 und der relevanten zweiten Läuferbleche 8.

Die beiden zweiten Läuferbleche 8 des jeweiligen Blechpaketabschnitts 5 sind derart in axialer Richtung angeordnet, dass ein jeweiliger, zweiter axialer Abstand 12 zwischen zwei jeweils benachbarten zweiten Läuferblechen 8 im Wesentlichen gleich groß wie ein jeweiliger dritter axialer Abstand 13 zwischen dem jeweiligen axialen Rand 11 des jeweiligen Blechpaketabschnitts 5 und dem jeweils nächstliegenden zweiten Läuferblech 8 ist. Insbesondere kann der zweite axiale Abstand 12 auch im Wesentlichen doppelt so groß gewählt werden wie der dritte axiale Abstand 13.

Insbesondere können beispielsweise 20 oder sogar mehr als 40 erste Läuferbleche 6 je Blechpaketabschnitt 5 zum Einsatz kommen. Somit weist das Blechpaket 2 höchstens in jeder zehnten Lage oder höchstens in jeder 20. Lage eines der zweiten Läuferbleche 8 und in den übrigen Lagen jeweils eines der ersten Läuferbleche 6 auf.

Im Inneren des jeweiligen ersten Läuferblechs und des jeweiligen zweiten Läuferblechs 8 können, wie in Figur 1 dargestellt, mehrere Bohrungen, Aussparungen oder dergleichen vorgesehen sein.

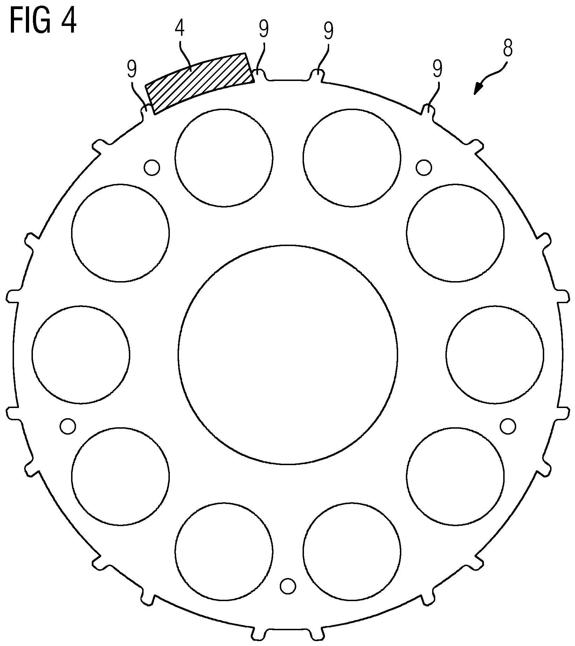

Figur 4 zeigt einen Querschnitt durch ein Ausführungsbeispiel eines zweiten Läuferblechs 8.

Das zweite Läuferblech 8 ist im Wesentlichen scheibenförmig ausgestaltet und weist mehrere, in radialer Richtung hervorstehende Vorsprünge 9 sowie einen im Wesentlichen kreisförmigen Querschnitt senkrecht zur axialen Richtung auf.

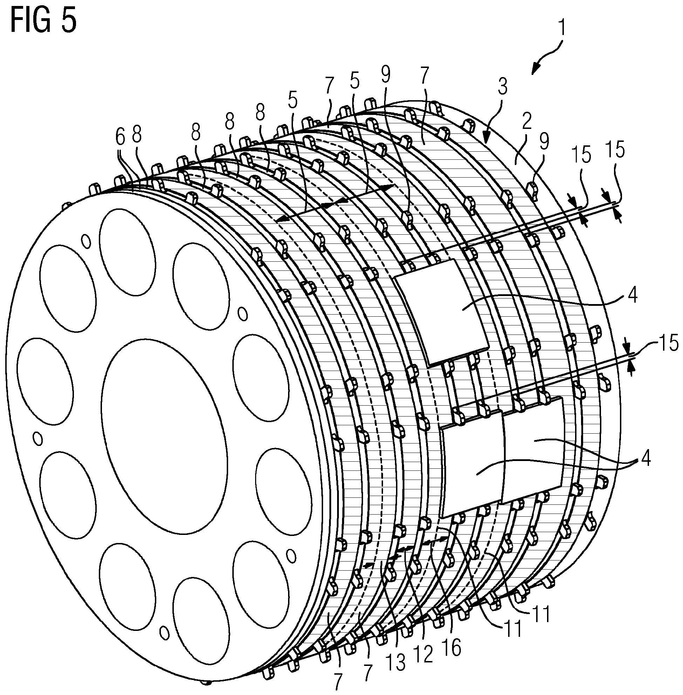

Figur 5 zeigt ein zweites Ausführungsbeispiel des vorgeschlagenen Rotors 1.

Der Rotor 1 gemäß dem zweiten Ausführungsbeispiel weist mehrere Klebebänder 7 auf, welche von dem Fixierelement umfasst sind. Das jeweilige Klebeband 4 ist dabei in radialer Richtung zwischen der radialen Außenseite 3 und dem jeweiligen Permanentmagneten 4 und in axialer Richtung zwischen zwei benachbarten Vorsprüngen 9 angeordnet. Das Fixierelement kann weiterhin ein näher dargestelltes Bandageband umfassen.

Vorzugsweise ist eine Breite des jeweiligen Klebebandes 7, welches zwischen zwei benachbarten Vorsprüngen 9 des jeweiligen Blechpaketabschnitts 5 angeordnet ist, dabei höchstens so groß wie der jeweilige zweite axiale Abstand 12.

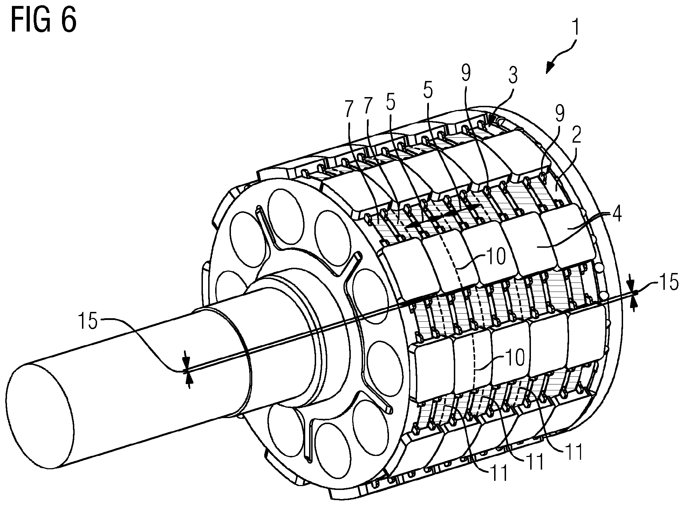

Figur 6 zeigt einen drittes Ausführungsbeispiel des vorgeschlagenen Rotors 1. Das dritte Ausführungsbeispiel entspricht im Wesentlichen dem zweiten Ausführungsbeispiel, wobei in der Figur 6 nun sämtliche, vorgesehenen Permanentmagnete 4 dargestellt sind.

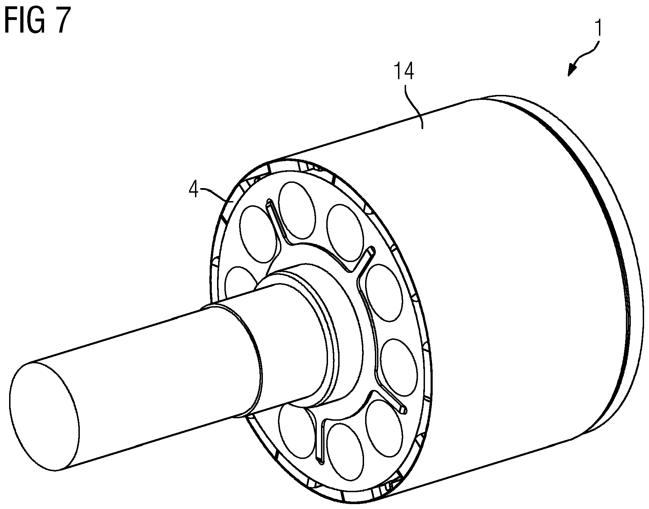

Figur 7 zeigt ein viertes Ausführungsbeispiel des vorgeschlagenen Rotors 1. Da das vierte Ausführungsbeispiel Ähnlichkeit mit dem ersten oder dem zweiten Ausführungsbeispiel aufweist, werden im Folgenden lediglich einige Unterschiede erläutert.

Der Rotor gemäß dem vierten Ausführungsbeispiel weist ein Bandageband 14 auf, welches von dem Fixierelement umfasst ist. Optional kann das Fixierelement Klebebänder 7 aufweisen, wie es beispielsweise im zweiten oder dritten Ausführungsbeispiel vorgesehen ist.

## Patentansprüche

1. Rotor (1) für eine elektrische Maschine umfassend
- ein Blechpaket (2), welches eine radiale Außenseite (3) aufweist,
- zumindest einen Permanentmagnet (4), welcher jeweils an der radialen Außenseite (3) des Blechpakets (2) angeordnet ist,
wobei das Blechpaket (2) in jenem jeweiligen axialen Blechpaketabschnitt (5), an dessen radialer Außenseite (3) der jeweilige Permanentmagnet (4) angeordnet ist, erste, im Wesentlichen scheibenförmige Läuferbleche (6) aufweist, und
- zumindest ein Fixierelement (7, 14), mittels welchem der jeweilige Permanentmagnet (4) in radialer Richtung auf der radialen Außenseite (3) des Blechpakets (2) fixiert ist,
wobei das Blechpaket (2) im jeweiligen Blechpaketabschnitt (5) zumindest ein zweites Läuferblech (8) aufweist, welches jeweils im Wesentlichen scheibenförmig ausgestaltet ist und jeweils zumindest zwei, in radialer Richtung hervorstehende Vorsprünge (9) aufweist,
wobei zumindest zwei der Vorsprünge (9) des jeweiligen zweiten Läuferblechs (8) derart in Umfangsrichtung versetzt zueinander angeordnet sind, dass der jeweilige, zwischen diesen beiden Vorsprüngen (9) angeordnete Permanentmagnet (4) in Umfangsrichtung vorzugsweise formschlüssig fixiert ist,
wobei am jeweiligen axialen Blechpaketabschnitt (5) zumindest zwei Permanentmagnete (4) in axialer Richtung aneinander angrenzend angeordnet sind,
wobei die zumindest zwei, in axialer Richtung aneinander angrenzend angeordneten Permanentmagnete (4) in Umfangsrichtung jeweils um einen Versatz (15) zu einander versetzt angeordnet sind,
wobei zumindest zwei Permanentmagnete (4) in axialer Richtung aneinander angrenzend an einem jeweiligen, axialen Blechpaketabschnitt (5) angeordnet sind,
wobei die jeweiligen Vorsprünge (9) der in axialer Richtung aneinander angrenzenden Blechpaketabschnitte (5) in Umfangsrichtung um den Versatz (15) zu einander versetzt angeordnet sind, wobei die ersten Läuferbleche (6) und das zumindest eine zweite Läuferblech (8) jeweils senkrecht zur axialen Richtung einen im Wesentlichen kreisförmigen Querschnitt aufweisen, wobei der jeweilige Permanentmagnet (4) im Wesentlichen die Form eines Abschnittes in Umfangsrichtung eines Hohlzylinders aufweist,
**dadurch gekennzeichnet, dass**
ein jeweiliger, erster axialer Abstand (16) zwischen den beiden benachbarten zweiten Läuferblechen (8) von benachbarten Blechpaketabschnitten (5) im Wesentlichen mindestens so groß ist wie eine aufsummierte axiale Längentoleranz der jeweiligen relevanten Permanentmagnete (4) und/ oder der relevanten ersten Läuferbleche (6) und relevanten zweiten Läuferbleche (8), wobei die Permanentmagnete (4) derart angeordnet sind, dass eine Staffelung der Permanentmagnete (4) ohne Spalte zwischen den in axialer Richtung benachbarten Permanentmagneten (4) ausführbar ist.

2. Rotor nach Anspruch 1,
wobei das Blechpaket (2) höchstens in jeder zehnten Lage bzw. höchstens in jeder 20. Lage eines des zumindest einen zweiten Läuferblechs (8) und in den übrigen Lagen jeweils eines der ersten Läuferbleche (6) aufweist.

3. Rotor nach einem der vorhergehenden Ansprüche,
wobei das Blechpaket (2) im jeweiligen Blechpaketabschnitt (5) zwei zweite Läuferbleche (8) aufweist, zwischen denen jeweils zumindest eines der ersten Läuferbleche (6) angeordnet ist,
wobei die zwei zweiten Läuferbleche (8) im Wesentlichen symmetrisch zur axialen Mitte (10) des jeweiligen Permanentmagneten (4) angeordnet sind.

4. Rotor nach einem der vorhergehenden Ansprüche,
wobei zwischen dem jeweiligen zweiten Läuferblech (8) und dem jeweiligen axialen Rand (11) des jeweiligen Blechpaketabschnitts (5) zumindest eines der ersten Läuferbleche (6) angeordnet ist.

5. Rotor nach einem der vorhergehenden Ansprüche,
wobei das zumindest eine Fixierelement (7) zumindest ein Klebeband (7) umfasst,
wobei das jeweilige Klebeband (7) zwischen der radialen Außenseite (3) und dem jeweiligen Permanentmagneten (4) angeordnet ist.

6. Rotor nach Anspruch 5,
wobei das jeweilige Klebeband (7) in axialer Richtung zwischen zwei benachbarten Vorsprüngen (9) angeordnet ist.

7. Rotor nach einem der vorhergehenden Ansprüche,
wobei der jeweilige Blechpaketabschnitt (5) zwei zweite Läuferbleche (8) aufweist, zwischen denen jeweils zumindest eines der ersten Läuferbleche (6) angeordnet ist,
wobei die zwei zweiten Läuferbleche (8) in axialer Richtung derart angeordnet sind, dass ein jeweiliger, zweiter axialer Abstand (12) zwischen zwei jeweils benachbarten zweiten Läuferblechen (8) im Wesentlichen doppelt so groß bzw. im Wesentlichen gleich groß wie ein jeweiliger dritter axialer Abstand (13) zwischen dem jeweiligen axialen Rand (11) des jeweiligen Blechpaketabschnitts (5) und dem jeweils nächstliegenden zweiten Läuferblech (8) ist.

8. Rotor zumindest nach Anspruch 5 und Anspruch 7,
wobei eine Breite des jeweiligen Klebebandes (7), welches zwischen zwei benachbarten Vorsprüngen (9) des jeweiligen Blechpaketabschnitts (5) angeordnet ist, höchstens so groß wie der jeweilige zweite axiale Abstand (12).

9. Rotor nach einem der vorhergehenden Ansprüche,
wobei das zumindest eine Fixierelement (14) zumindest ein Bandageband (14) umfasst, welches jeweils um das Blechpaket (2) und dem darauf angeordneten, zumindest einen Permanentmagnet (4) gewickelt ist.

10. Elektrische Maschine aufweisend einen Rotor nach einem der vorhergehenden Ansprüche.

11. Verfahren zur Herstellung eines Rotors (1) nach einem der Ansprüche 1 bis 9, insbesondere für eine elektrische Maschine, umfassend die folgenden Verfahrensschritte:
- Bereitstellen erster, im Wesentlichen scheibenförmiger Läuferbleche (6) und zumindest eines zweiten Läuferblechs (8), welches jeweils im Wesentlichen scheibenförmig ausgestaltet ist und jeweils zumindest zwei, in radialer Richtung hervorstehende Vorsprünge (9) aufweist,
- Bereitstellen zumindest eines Permanentmagneten (4),
- Anordnen der ersten Läuferbleche (6) und des zumindest einen zweiten Läuferblechs (8) zu einem Blechpaket (2), welches eine radiale Außenseite (3) aufweist,
- Bereitstellen zumindest eines Fixierelementes (7, 14), mittels welchem der jeweilige Permanentmagnet (4) in radialer Richtung auf der radialen Außenseite (3) des Blechpakets (2) fixierbar ist,
- Anordnen des jeweiligen Permanentmagneten (4) an der radialen Außenseite (3) des Blechpakets (2) und
- Fixieren des jeweiligen Permanentmagneten (4) in radialer Richtung auf der radialen Außenseite (3) des Blechpakets (2) mittels des zumindest einen Fixierelementes (7, 14),
wobei das Blechpaket (2) in jenem jeweiligen axialen Blechpaketabschnitt (5), an dessen radialer Außenseite (3) der jeweilige Permanentmagnet (4) angeordnet ist, die ersten Läuferbleche (6) und das zumindest eine zweite Läuferblech (8) aufweist,
wobei zumindest zwei der Vorsprünge (9) des jeweiligen zweiten Läuferblechs (8) derart in Umfangsrichtung versetzt einander angeordnet sind, dass der jeweilige, zwischen diesen beiden Vorsprüngen (9) angeordnete Permanentmagnet (4) in Umfangsrichtung vorzugsweise formschlüssig fixiert ist.

## Claims

1. Rotor (1) for an electric machine comprising
- a laminated core (2) which has a radial exterior (3),
- at least one permanent magnet (4), which is arranged in each case on the radial exterior (3) of the laminated core (2),
wherein in that respective axial laminated core section (5) on the radial exterior (3) of which the respective permanent magnet (4) is arranged, the laminated core (2) has first, substantially disc-shaped rotor laminations (6), and
- at least one fixing element (7, 14), by means of which the respective permanent magnet (4) is fixed in the radial direction on the radial exterior (3) of the laminated core (2),
wherein the laminated core (2) in the respective laminated core section (5) has at least one second rotor lamination (8), which in each case is embodied substantially disc-shaped and in each case has at least two projections (9) which project in the radial direction,
wherein at least two of the projections (9) of the respective second rotor lamination (8) are arranged offset in relation to one another in the peripheral direction such that the respective permanent magnet (4) arranged between these two projections (9) is fixed in a preferably form-fit manner in the peripheral direction,
wherein at least two permanent magnets (4) are arranged adjacent to one another in the axial direction on the respective axial laminated core section (5),
wherein the at least two permanent magnets (4) arranged adjacent to one another in the axial direction are arranged offset in relation to one another by an offset (15) in the peripheral direction in each case,
wherein at least two permanent magnets (4) are arranged adjacent to one another on a respective axial laminated core section (5) in the axial direction,
wherein the respective projections (9) of the laminated core sections (5) adjacent to one another in the axial direction are arranged offset in relation to one another by the offset (15) in the peripheral direction,
wherein the first rotor laminations (6) and the at least one second rotor lamination (8) in each case have a substantially circular cross-section at right angles to the axial direction, wherein the respective permanent magnet (4) has essentially the shape of a section in the peripheral direction of a hollow cylinder,
**characterised in that**
a respective first axial distance (16) between the two adjacent second rotor laminations (8) of adjacent laminated core sections (5) is substantially at least as large as a totalled axial length tolerance of the respective relevant permanent magnets (4) and/or of the relevant first rotor laminations (6) and relevant second rotor laminations (8), wherein the permanent magnets (4) are arranged such that the permanent magnets (4) can be staggered without gaps between the permanent magnets (4) which are adjacent in the axial direction.

2. Rotor according to claim 1,
wherein the laminated core (2) has one of the at least one second rotor lamination (8) at most at every tenth position or at most at every twentieth position and in each case one of the first rotor laminations (6) in the remaining positions.

3. Rotor according to one of the preceding claims,
wherein the rotor lamination (2) in the respective laminated core section (5) has two second rotor laminations (8), between which in each case at least one of the first rotor laminations (6) is arranged,
wherein the two second rotor laminations (8) are arranged substantially symmetrically in relation to the axial centre (10) of the respective permanent magnet (4).

4. Rotor according to one of the preceding claims,
wherein at least one of the first rotor laminations (6) is arranged between the respective second rotor lamination (8) and the respective axial edge (11) of the respective laminated core section (5).

5. Rotor according to one of the preceding claims,
wherein the at least one fixing element (7) comprises at least one adhesive tape (7), wherein the respective adhesive tape (7) is arranged between the radial exterior (3) and the respective permanent magnet (4).

6. Rotor according to claim 5,
wherein the respective adhesive tape (7) is arranged in the axial direction between two adjacent projections (9).

7. Rotor according to one of the preceding claims,
wherein the respective laminated core section (5) has two second rotor laminations (8), between which in each case at least one of the first rotor laminations (6) is arranged, wherein the two second rotor laminations (8) are arranged in the axial direction such that a respective second axial distance (12) between two in each case adjacent second rotor laminations (8) is substantially twice as large as or substantially the same size as a respective third axial distance (13) between the respective axial edge (11) of the respective laminated core section (5) and the respective closest second rotor lamination (8).

8. Rotor at least according to claim 5 and claim 7,
wherein a width of the respective adhesive tape (7), which is arranged between two adjacent projections (9) of the respective laminated core section (5), is at most as large as the respective second axial distance (12).

9. Rotor according to one of the preceding claims,
wherein the at least one fixing element (14) comprises at least one binding tape (14), which is wound in each case around the laminated core (2) and the at least one permanent magnet (4) arranged thereupon.

10. Electric machine having a rotor according to one of the preceding claims.

11. Method for producing a rotor (1) according to one of claims 1 to 9, in particular for an electric machine, comprising the following method steps:
- providing first, substantially disc-shaped rotor laminations (6) and at least one second rotor lamination (8), which in each case is designed to be substantially disc-shaped and in each case has at least two projections (9) which project in the radial direction,
- providing at least one permanent magnet (4),
- arranging the first rotor laminations (6) and the at least one second rotor lamination (8) in relation to a laminated core (2), which has a radial exterior (3),
- providing at least one fixing element (7, 14), by means of which the respective permanent magnet (4) can be fixed in the radial direction on the radial exterior (3) of the laminated core (2),
- arranging the respective permanent magnet (4) on the radial exterior (3) of the laminated core (2) and
- fixing the respective permanent magnet (4) in the radial direction on the radial exterior (3) of the laminated core (2) by means of the at least one fixing element (7, 14),
wherein the laminated core (2) in the respective axial laminated core section (5) on the radial exterior of which (3) the respective permanent magnet (4) is arranged, has the first rotor laminations (6) and the at least one second rotor lamination (8),
wherein at least two of the projections (9) of the respective second rotor lamination (8) are arranged offset in relation to one another in the peripheral direction such that the respective permanent magnet (4) arranged between these two projections (9) is fixed in a preferably form-fit manner in the peripheral direction.

## Revendications

1. Rotor (1) pour une machine électrique, comprenant
- un paquet (2) de tôles, qui a une face (3) extérieure radiale,
- au moins un aimant (4) permanent, qui est disposé sur la face (3) extérieure radiale du paquet (2) de tôles, le paquet (2) de tôles ayant, dans chaque tronçon (5) axial, sur la face (3) extérieure radiale de laquelle l'aimant (4) permanent est disposé, des premières tôles (6) rotoriques sensiblement en forme de disque et
- au moins un élément (7, 14) d'immobilisation, au moyen duquel l'aimant (4) permanent est immobilisé, dans la direction radiale, sur la face (3) extérieure radiale du paquet (2) de tôles,
le paquet (2) de tôles ayant, dans le tronçon (5) de paquet de tôles, au moins une deuxième tôle (8) rotorique, qui est conformée sensiblement en forme de disque et qui a au moins deux saillies (9) faisant saillie dans la direction radiale,
dans lequel au moins deux des saillies (9) de la deuxième tôle (8) rotorique sont décalées l'une par rapport à l'autre dans la direction périphérique, de manière à ce que l'aimant (4) permanent disposé entre ces deux saillies (9) soit immobilisé, de préférence à complémentarité de forme, dans la direction périphérique,
dans lequel, sur le tronçon (5) de paquet de tôles axial, au moins deux aimants (4) permanents sont juxtaposés dans la direction axiale,
dans lequel les au moins deux aimants (4) permanents juxtaposés dans la direction axiale sont décalés l'un par rapport à l'autre d'un décalage (15) dans la direction périphérique,
dans lequel au moins deux aimants (4) permanents sont juxtaposés dans la direction axiale sur un tronçon (5) de paquet de tôles axial,
dans lequel les saillies (9) des tronçons (5) de paquet de tôles juxtaposés dans la direction axiale sont décalées l'une par rapport à l'autre d'un décalage (15) dans la direction périphérique,
dans lequel les premières tôles (6) rotoriques et la au moins une deuxième tôle (8) rotorique ont, perpendiculairement à la direction axiale, une section transversale sensiblement circulaire, l'aimant (4) permanent ayant sensiblement la forme d'un tronçon dans la direction périphérique d'un cylindre creux,
**caractérisé en ce que**
une première distance (16) axiale entre les deuxièmes tôles (8) rotoriques voisines de tronçons (5) de paquet de tôles voisins est sensiblement aussi grande qu'une tolérance longitudinale axiale sommée des aimants (4) permanents concernés et/ou des premières tôles (6) rotoriques concernées et des deuxièmes tôles (8) rotoriques concernées,
dans lequel les aimants (4) permanents sont disposés de manière à pouvoir réaliser un échelonnement des aimants (4) permanents sans intervalle entre les aimants (4) permanents voisins dans la direction axiale.

2. Rotor suivant la revendication 1,
dans lequel le paquet (2) de tôles a, au plus, dans une couche sur dix ou, au plus, dans une couche sur 20, l'une de la au moins une deuxième tôle (8) rotorique et, dans les autres couches, l'une des premières tôles (6) rotoriques.

3. Rotor suivant l'une des revendications précédentes,
dans lequel le paquet (2) de tôles a, dans le tronçon (5) de paquet de tôles, deux deuxièmes tôles (8) rotoriques, entre lesquelles est disposée au moins l'une des premières tôles (6) rotoriques,
dans lequel les deux deuxièmes tôles (8) rotoriques sont disposées sensiblement symétriquement par rapport au milieu (10) axial de l'aimant (4) permanent.

4. Rotor suivant l'une des revendications précédentes,
dans lequel au moins l'une des premières tôles (6) rotoriques est disposée entre la deuxième tôle (8) rotorique et le bord (11) axial du tronçon (5) de paquet de tôles.

5. Rotor suivant l'une des revendications précédentes,
dans lequel le au moins un élément (7) d'immobilisation comprend au moins un ruban (7) adhésif,
le ruban (7) adhésif étant disposé entre la face (3) extérieure radiale et l'aimant (4) permanent.

6. Rotor suivant la revendication 5,
dans lequel le ruban (7) adhésif est disposé dans la direction axiale entre deux saillies (9) voisines.

7. Rotor suivant l'une des revendications précédentes,
dans lequel le tronçon (5) de paquet de tôles a deux deuxièmes tôles (8) rotoriques, entre lesquelles est disposée au moins l'une des premières tôles (6) rotoriques, dans lequel les deux deuxièmes tôles (8) rotoriques sont disposées dans la direction axiale, de manière à ce qu'une deuxième distance (12) axiale entre deux deuxièmes tôles (8) rotoriques voisines soit sensiblement égale au double d'une troisième distance (13) axiale ou sensiblement égale à cette troisième distance (13) axiale entre le bord (11) axial du tronçon (5) de paquet de tôles et la deuxième tôle (8) rotorique venant immédiatement ensuite.

8. Rotor suivant la revendication 5 et la revendication 7,
dans lequel une largeur du ruban (7) adhésif, qui est disposé entre deux saillies (6) voisines du tronçon (5) de paquet de tôles, est, au plus, aussi grande que la deuxième distance (12) axiale.

9. Rotor suivant l'une des revendications précédentes,
dans lequel le au moins un élément (14) d'immobilisation comprend au moins un ruban (14) de bandage, qui est enroulé autour du paquet (2) de tôles et du au moins un aimant (4) permanent qui y est disposé.

10. Machine électrique ayant un rotor suivant l'une des revendications précédentes.

11. Procédé de fabrication d'un rotor (1) suivant l'une des revendications 1 à 9, notamment pour une machine électrique, comprenant les stades de procédé suivants :
- on se procure des premières tôles (6) rotoriques sensiblement en forme de disque et au moins une deuxième tôle (8) rotorique, qui est conformée sensiblement en forme de disque et qui a au moins deux saillies (9) faisant saillie dans la direction radiale,
- on se procure au moins un aimant (4) permanent,
- on forme les premières tôles (6) rotoriques et la au moins une deuxième tôle (8) rotorique en un paquet (2) de tôles, qui a une face (3) extérieure radiale,
- on se procure au moins un élément (7, 14) d'immobilisation, au moyen duquel l'aimant (4) permanent peut être immobilisé dans la direction radiale sur la face (3) extérieure radiale du paquet (2) de tôles,
- on met l'aimant (4) permanent sur la face (3) extérieure radiale du paquet (2) de tôles et
- on immobilise l'aimant (4) permanent dans la direction radiale sur la face (3) extérieure radiale du paquet (2) de tôles au moyen du au moins un élément (7, 14) d'immobilisation,
dans lequel le paquet (2) de tôles a, dans chaque tronçon (5) de paquet de tôles axial, sur la face (3) extérieure radiale de laquelle l'aimant (4) permanent est disposé, les premières tôles (6) rotoriques et la au moins une deuxième tôle (8) rotorique,
dans lequel au moins deux des saillies (9) de la deuxième tôle (8) rotorique sont décalées l'une par rapport à l'autre dans la direction périphérique, de manière à immobiliser, de préférence à complémentarité de forme, dans la direction périphérique, l'aimant (4) permanent disposé entre ces deux saillies (9).
